# EUROPÄISCHE PATENTSCHRIFT

(11) **EP 0 771 521 B1**
(45) Veröffentlichungstag und Bekanntmachung des Hinweises auf die Patenterteilung: **30.05.2001**
(21) Anmeldenummer: 96116650.1
(22) Anmeldetag: 17.10.1996
(51) Int. Cl.: A01D 34/66

(54) **Scheibenmähwerk**
Disc cutter bar
Barre de coupe à disque

(30) Priorität: 06.11.1995 DE 29517559 U
(43) Veröffentlichungstag der Anmeldung: 07.05.1997
(73) Patentinhaber: NIEMEYER Landmaschinen GmbH, 48477 Hörstel-Riesenbeck (DE)
(72) Erfinder: Ungruh, Josef, 48429 Rheine (DE); Tebbenhoff, Hermann, 48496 Hopsten (DE)

(56) Entgegenhaltungen:
- EP-A- 0 188 682
- EP-A- 0 358 045
- DE-A- 2 222 415
- DE-A- 2 524 348
- DE-A- 2 703 043
- DE-A- 3 324 851
- DE-C- 4 401 500
- FR-A- 2 297 552
- FR-A- 2 326 857
- FR-A- 2 380 713
- NL-A- 8 601 559

## Beschreibung

Die Erfindung betrifft ein Scheibenmähwerk gemäß dem Oberbegriff des Anspruchs 1.

Aus der DE 44 01 500 C1 ist ein Tellermähwerk bekannt mit mehreren gleichen, quer zur Fahrtrichtung benachbarten Mähtellern, die gruppenweise gleichsinnig angetrieben sind und bei dem die mittleren Mähtellern benachbarten Mähteller mit Förderorganen und/oder Förderelementen ausgerüstet sind. Dabei sollen die als Förderrampen ausgebildeten Förderelemente einen konstanten Radius aufweisen, der größer als der kleine Halbmesser des elliptisch ausgebildeten Mähtellers ist. Die
Förderrampen sind fest mit dem Mähteller und dem Förderorgan verbunden und befinden sich im Übergangsbereich zwischen dem großen und dem kleinen Halbmesser des ellipsenförmigen Mähtellers.

Aus der DE-A-25 24 348 ist ein Scheibenmähwerk mit vier, quer zur Fahrtrichtung nebeneinander auf einem Mähbalken angeordneten rotierend antreibbaren, mit Schneidmessern versehen Mähscheiben bekannt, wobei je eine äußere und eine innere Mähscheibe ein Mähkörperpaar bilden. Dabei sind die außenliegend angeordneten Mähscheiben mit drei und die innenliegend angeordneten Mähscheiben mit zwei Schneidmessern bestückt, wobei die Schneidkreise die außenliegenden Mähscheiben größer sind als die der innenliegenden Mähscheiben, wobei das Verhältnis der Drehzahlen von zwei paarweise zusammenwirkenden Mähscheiben dem Messerzahlverhältnis der von diesen Mähscheiben getragenen Schneidmessern umgekehrt proportional ist. Dabei sind die äußeren Mähscheiben mit drei und die inneren Mähscheiben mit zwei Schneidmessern bestückt. Demzufolge sind die Schneidkreise der außenliegend Mähscheiben untereinander und die Schneidkreise der innenliegenden Mähscheiben untereinander gleich. Demzufolge sind die Arbeitskreise der außenliegend Mähscheiben untereinander und die Arbeitskreise der innenliegenden Mähscheiben ebenfalls untereinander gleich.

Aufgabe der Erfindung ist es, ein Scheibenmähwerk mit verbesserter Mähgutförderung zu einem Mähschwad zu schaffen.

Die Erfindung löst die Aufgabe mit den Merkmalen des kennzeichnenden Teils des Anspruchs 1. Hinsichtlich weiterer wesentlicher Ausgestaltungen der Erfindung wird auf die Ansprüche 2 bis 12 verwiesen.

Ein Scheibenmähwerk nach der Erfindung hat zwei gegenläufig rotierende Mähscheibengruppen, die das zu schneidende Mähgut aufeinander zu fördern und damit einen Mähschwad bilden. Dabei nimmt der Umfang des Mähgutes bei der Förderung von den äußeren zu den inneren Mähscheiben zu, so daß sichergestellt werden muß, daß das Scheibenmähwerk auch mit großen Mengen Mähgut verstopfungsfrei und ohne Streifenbildung arbeitet. Die Erfindung löst dieses Problem auf einfache Weise, indem die Mähscheiben unterschiedliche Arbeitskreise aufweisen, die dadurch erreicht werden, daß die Längsausdehnungen einiger Mähteller mit elliptischer Grundform in ihrer Längsausdehnung größer sind. Um trotzdem einen geraden Schnitt des Scheibenmähwerks zu behalten, weisen die Schneidmesser der Mähscheiben gleiche Schneidkreise auf. Dies hat einen weiteren Vorteil zur Folge. Der Überstand der Schneidmesser bei den Mähscheiben größerer Abmessung ist geringer. Dadurch wird bei größerem Mähgutanfall im Bereich dieser größeren Mähscheiben die Gefahr eines Ausweichens des Schneidmessers geringer, ohne den Schneideffekt zu verschlechtern.

Bei beispielsweise zwei Gruppen von gleichsinnig umlaufenden Mähscheiben sieht die Erfindung vor, daß die mittlere Mähscheibe jeder Gruppe einen vergrößerten Arbeitskreis beschreibt, also das Mähgut, das von der äußeren Mähscheibe in diese Richtung gefördert wird, mehr Kontrakt mit der größeren Scheibe erhält und dadurch eine verbesserte Förderung gewährleistet wird. Die zur Mitte des Scheibenmähwerks hin gerichtete Mähscheibe der Gruppe ist ohne zusätzliche Förderorgane, da in diesem Bereich das Mähgut über die Mähscheiben hinweggleitet und sich in einem Mähschwad hinter dem Scheibenmähwerk ablegt.

Durch eine besonders günstige Ausbildung der Mähscheiben kann neben der vergrößerten Abmessung auch durch die Form der Mähscheibe selbst das Förderverhalten weiter unterstützt werden. So ist nach der Erfindung vorgesehen, daß im äußeren Bereich der ellipsenförmigen Mähscheiben Kerben o.ä. zu dieser zusätzlichen Förderung beitragen.

Die äußeren Mähscheiben der Gruppen des Scheibenmähwerkes sind in bekannter Weise mit trommelartigen Förderelementen versehen. Nach der Erfindung können an diesen Förderelementen zusätzliche Mitnehmer angeordnet sein, die je nach Arbeitsbreite des Scheibenmähwerks und Anzahl der Mähscheiben auf einem oder mehreren Trommeln verteilt angeordnet sind. Ihre Größe und Ausführung richtet sich nach dem zu fördernden Mähgut.

Die zusätzlichen Förderorgane im Bereich der Trommel können verschiedene Formen aufweisen. Durch die höhere Anordnung zur Schneidebene erfassen sie das Mähgut weiter oben und verhindern damit ein Kippen der Stengel.

Ein weiterer wesentlicher Vorteil der Erfindung ist es, daß auf den größeren Mähscheiben im Bereich der größeren Längsausdehnung Förderelemente angeordnet werden können, die das Mähgut verstärkt fördern und anheben. Diese Förderelemente sind vorzugsweise lösbar mit der jeweiligen Mähscheibe verbunden. Die Erfindung sieht vor, daß durch Umschrauben sowohl rechts- als auch linksdrehende Mähteller wahlweise mit den gleichen Förderelementen bestückt werden können.

Die Förderelemente weisen entgegen der Drehrichtung der Mähscheibe einen ansteigenden Rampenbereich auf und bilden mit ihrer Vorderkante einen spitzen
Winkel mit der Längsachse der elliptischen Mähscheibenkontur. Durch diese Schrägstellung zur Längsachse der Mähscheibe wird beim Rotieren ein starker zusätzlicher Fördereffekt in Mähschwadrichtung erzeugt, wobei gleichzeitig das Mähgut angehoben wird, um den Schneidmessern einen ausreichenden Freiraum zum Schneiden des Mähgutes zu erhalten.

Die Außenkontur der Förderelemente entspricht in der Draufsicht im wesentlichen der benachbarten Außenkontur der Mähscheibe und schließt mit dieser ab. Dies ist für ein einwandfreies Schneiden des Mähgutes in diesem Bereich von Bedeutung.

Die Erfindung sieht ferner vor, daß der äußere Endpunkt der Vorderkante der Förderelemente in Mähscheibendrehrichtung dem inneren Endpunkt voreilt. Dieser Endpunkt und die Rampe des Förderelementes sollten im wesentlichen im Bereich der Breite des Schneidmessers der Mähscheibe angeordnet sein, um eine besonders effektive Wirkung zu zeigen.

Jeder größere Mähteller ist wie die übrigen Mähteller jeweils mit zwei Schneidmessern ausgerüstet. Die größeren Mähteller sind zusätzlich mit je zwei Förderelementen ausrüstbar.

Die Erfindung sieht vor, daß zwischen den äußeren Mähscheiben jeder Gruppe, die mit trommelartigen Förderorganen ausgerüstet sind, jeweils ein Überleitorgan angeordnet ist, das den Zwischenraum zwischen den Trommeln und über der Schneidebene für das Mähgut weitgehend verschließt. Dadurch wird die Übergabe des Mähgutes von der äußeren zur benachbarten Mähscheibe verbessert, und es kann kein Mähgut zwischen den Trommeln der Mähscheiben hindurchgeführt werden.

Die Vorteile der Erfindung können auch bei Scheibenmähwerken zum Frontanbau an Traktoren angewendet werden.

Weitere Merkmale und Vorteile der Erfindung ergeben sich aus der nachfolgenden Beschreibung und den Zeichnungen, in denen ein Ausführungsbeispiel eines Scheibenmähwerkes nach der Erfindung schematisch, angenähert maßstäblich dargestellt ist.

Es zeigt:
- Fig. 1 -: Ein Scheibenmähwerk zum Heckanbau an einen Traktor in Arbeitsstellung in einer Draufsicht.
- Fig. 2 -: Das Scheibenmähwerk nach Fig. 1 in einer Ansicht in Fahrtrichtung.
- Fig. 3 -: Schnitt A-A gemäß Fig. 2 in vergrößertem Maßstab.
- Fig. 4 -: Ansicht C gemäß Fig. 3.
- Fig. 5 -: Schnitt B-B gemäß Fig. 3 in vergrößertem Maßstab.

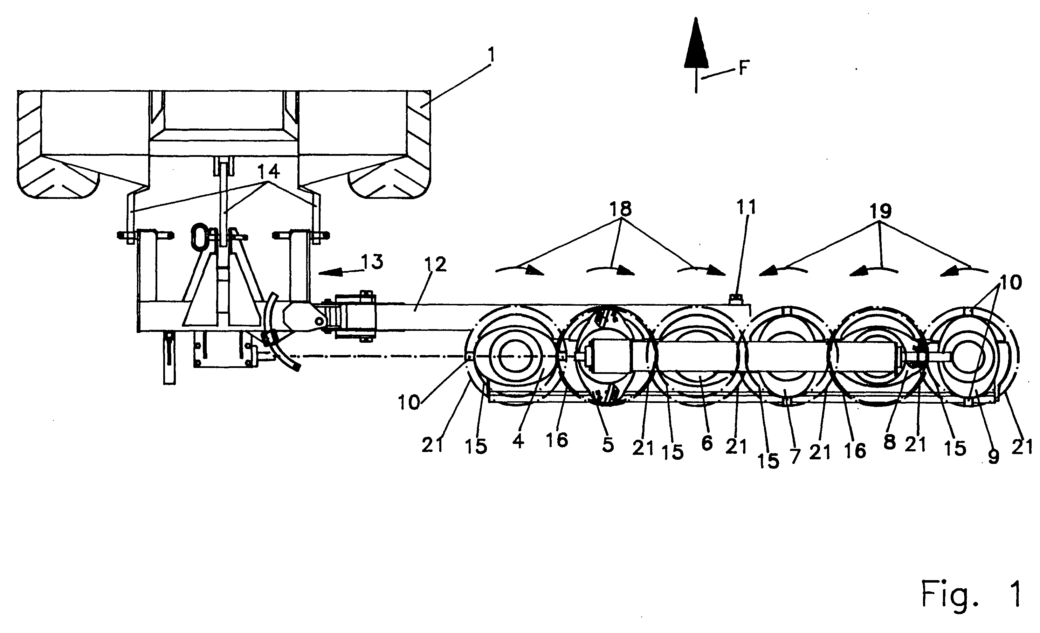

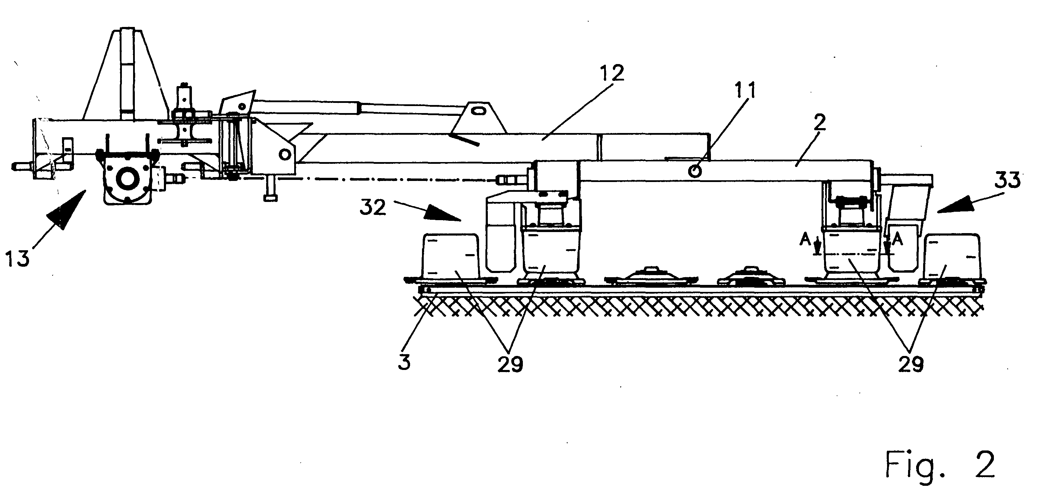

Als Ausführungsbeispiel für die Erfindung ist ein Heckscheibenmähwerk in Arbeitsstellung dargestellt, das von einem Traktor (1) in Fahrtrichtung (F) gezogen wird (Fig. 1;2). Auf die Darstellung von für die Erfindung unwesentlichen Details ist verzichtet worden. Die von der Traktorzapfwelle rotierend angetriebenen Mähscheiben (4,5,6,7,8,9) sind nebeneinander auf einem Mähbalken (3) angeordnet und jeweils mit zwei Schneidmessern (10) bestückt. Der Mähbalken (3) bildet mit einem Tragrahmen (2) eine Einheit, die um einen Schwenkpunkt (11) pendelnd an einem Ausleger (12) angelenkt ist. Der Ausleger (12) ist die Verbindung zum Tragbock (13), der das Scheibenmähwerk über ein Dreipunktgestänge (14) mit dem Traktor (1) verbindet.

Einige Mähscheiben (4,6,7,9) sind nach dem Ausführungsbeispiel gleich groß und beschreiben daher gleiche Arbeitskreise (15). Andere Mähscheiben (5,8) sind in ihrer Längsausdehnung (17) größer und beschreiben einen größeren Arbeitskreis (16).

Bezüglich der Drehrichtung sind die Mähscheiben (4,5,6,7,8,9) in zwei Gruppen eingeteilt, und zwar in Mähscheiben (4,5,6) rechtsdrehend (18) und Mähscheiben (7,8,9) linksdrehend (19). Diese gegenläufigen Gruppen fördern das Mähgut in die Mitte des Scheibenmähwerks, wo es über die Mähscheiben (6,7) hinweggleitet und dabei einen Mähschwad bildet.

Innerhalb der gegenläufig drehenden Mähscheibengruppen ist nach dem Ausführungsbeispiel jeweils die mittlere Mähscheibe (5,8) in ihren Abmessungen so ausgebildet, daß sie einen größeren Arbeitskreis (16) beschreibt, was eine zusätzliche Förderwirkung auf das Mähgut zur Folge hat.

Der Schneidkreis (21) der Schneidmesser (10) der Mähscheiben (4,5,6,7,8,9) ist gleich. Die wirksame Schneidlänge (20) der Schneidmesser (10) ist jedoch bei den größeren Mähscheiben (5,8) kleiner als bei den übrigen Mähscheiben (4,6,7,9). Dies hat den Vorteil, daß der in diesem Bereich große Mähschwad die Schneidmesser (10) nicht seitlich ablenken kann, was eine Verschlechterung des Schnittbildes zur Folge hätte.

Nach dem Ausführungsbeispiel haben alle Mähscheiben (4,5,6,7,8,9) eine ellipsenförmige Grundform und die Mähscheiben (5,8), die einen vergrößerten Arbeitskreis (16) beschreiben, und in Fig. 13 beispielsweise dargestellt sind, eine größere Längsausdehnung (17). Im Bereich dieser größeren Längsausdehnung (17) ist auf jeder Seite ein Förderelement (23) angeordnet, das lösbar mit der Mähscheibe (5,8) verbunden ist. Hierdurch wird das Mähgut verstärkt gefördert und gleichzeitig angehoben. Um das gleiche Förderelement (23) sowohl bei rechtsdrehendem Mähteller (5) als auch bei dem linksdrehenden Mähteller (8) verwenden zu können, ist das Förderelement (23) entsprechend ausgebildet. Für die wechselseitige Anbringung sind zusätzliche Befestigungslöcher (24) in den Mähscheiben (5,8) vorgesehen. Die Außenkontur (25) der Förderelemente (23) ist in der Draufsicht in ihrer Form der Außenkontur der großen Mähscheibe (5,8) in diesem Bereich angepaßt, damit diese mit der Außenkontur der Mähscheibe (5,8) abschließt. Der äußere Endpunkt (34) der Vorderkante (27) des Förderelementes (23) eilt in Drehrichtung dem inneren Endpunkt (35) vorzugsweise vor, um die Förderwirkung zu verstärken.

Die Vorderkante (27) des Förderelementes bildet mit der Längsachse (28) der elliptischen Mähscheibenkontur einen spitzen Winkel (α), wodurch die zusätzliche Förderung des Mähgutes intensiviert wird. Die Vorderkante (27) und damit der äußere Endpunkt (34) des Förderelementes (23) endet vorzugsweise im Breitenbereich des Schneidmessers (10).

Das Förderelement (23) hat entgegen der Drehrichtung der Mähscheibe (5,8) einen ansteigenden Rampenbereich (26), wodurch das Mähgut zusätzlich gefördert und angehoben wird, (Fig. 5).

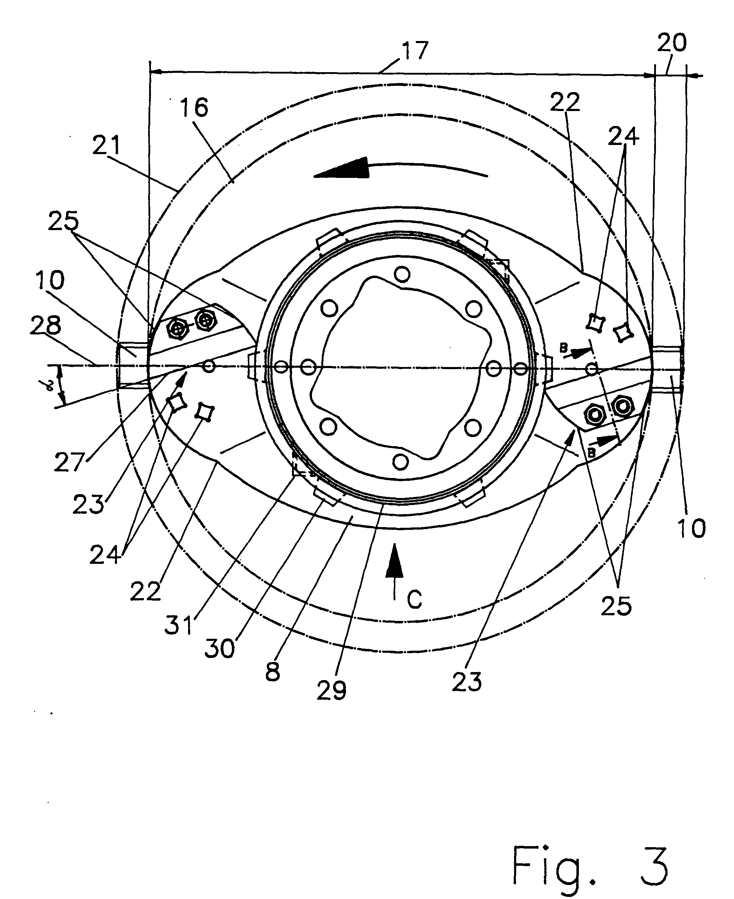

Die Förderwirkung der größeren Mähscheibe (5,8) mit elliptischer Grundform kann im Bereich der größeren Längsausdehnung (17) noch gesteigert werden, indem beispielsweise in Drehrichtung Kerben (22) angeordnet werden (Fig. 3).

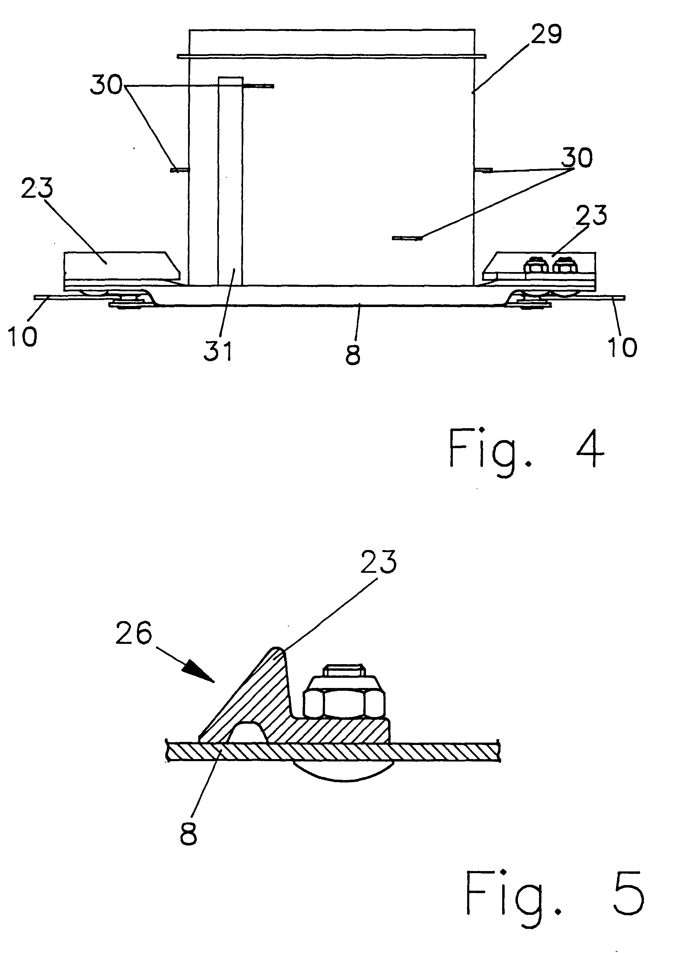

Die äußeren Mähscheiben (4,5; 8,9) des Scheibenmähwerks sind nach dem Ausführungsbeispiel mit zusätzlichen trommelartigen Förderorganen (29) ausgerüstet, (Fig. 3; 4), die oberhalb der Schneidebene der Schneidmesser (10) und der Mähteller die Förderung unterstützen. Auf diesen trommelartigen Förderorganen (29) sind weitere Förderorgane (30,31) unterschiedlicher Form auf dem Umfang verteilt angeordnet. Sie tragen ebenfalls zur Förderung des Mähgutes bei, insbesondere im oberen Bereich des sich bildenden Mähschwades.

Damit das seitlich geförderte Mähgut nicht zwischen den Mähscheiben (4,5;8,9) hindurchtreten kann, sind nach der Erfindung jeweils ein Überleitorgan (32,33) vorgesehen, das in seinem wirksamen Teil vorzugsweise aus flexiblem Material besteht.

## Patentansprüche

1. Scheibenmähwerk mit mindestens zwei quer zur Fahrtrichtung (F) nebeneinander auf einem Mähbalken (3) angeordneten antreibbaren gegenläufig rechtsdrehenden (18) bzw. linksdrehenden (19) Mähscheibengruppen, die das zu schneidende Mähgut aufeinander zufördern und deren mit Schneidmessern (10) bestückte Mähscheiben (4,5,6,7,8,9) Schneidkreise (21) erzeugen, die einander überschneiden, und deren Mähscheiben (4,5,6,7,8,9) unterschiedliche Abmessungen besitzen, **dadurch gekennzeichnet,** daß alle Mähscheiben (4,5,6,7,8,9) gleiche Schneidkreise (21) beschreiben und mindestens eine Mähscheibe (5;8) gegenüber einer benachbarten Mähscheibe (4;6),(7;9) unterschiedliche Arbeitskreise (15,16) bedingende Abmessungen aufweist.

2. Scheibenmähwerk nach Anspruch 1, dadurch gekennzeichnet, daß die Schneidmesser (10) der Mähscheibe(n) (5,8) mit größerem Arbeitskreis (16) eine geringere wirksame Schneidlänge (20) als die Schneidmesser (10) an anderen Mähscheiben (4,6,7,9) aufweisen.

3. Scheibenmähwerk nach Anspruch 1, dadurch gekennzeichnet, daß bei einer Gruppe von drei gleichsinnig umlaufenden Mähscheiben (4,5,6;7,8,9) die mittlere Mähscheibe (5,8) einen vergrößerten Arbeitskreis (16) beschreibt.

4. Scheibenmähwerk nach einem der Ansprüche 1 bis 3, dadurch gekennzeichnet, daß bei zwei, die Schwadbreite bestimmenden, jeweils zu einer Gruppe von gleichsinnig umlaufenden Mähscheiben (4,5,6;7,8,9) gehörenden Mähscheiben (6,7) diesen Mähscheiben (5,8) mit vergrößertem Arbeitskreis (16) nebengeordnet sind.

5. Scheibenmähwerk nach einem der Ansprüche 1 bis 4, dadurch gekennzeichnet, daß die Mähscheiben (4,5,6,7,8,9) eine ellipsenförmige Grundform aufweisen und die Mähscheiben (5,8) mit vergrößertem Arbeitskreis (16) in ihrer Längsausdehnung (17) größer sind als die übrigen Mähscheiben (4,6,7,9).

6. Scheibenmähwerk nach einem der Ansprüche 1 bis 5, dadurch gekennzeich net, daß die Mähscheiben (5,8) mit größerem Arbeitskreis (16) im Bereich der größeren Längsausdehnung (17) Förderelemente (23) tragen, die das Mähgut verstärkt fördern und anheben.

7. Scheibenmähwerk nach Anspruch 6, dadurch gekennzeichnet, daß die Förderelemente (23) lösbar mit ihrer Mähscheibe (5,8) verbunden sind.

8. Scheibenmähwerk nach einem der Ansprüche 6 oder 7, dadurch gekennzeichnet, daß die Förderelemente (23) auf den Mähscheiben (5,8) für rechts- oder linksdrehenden Einsatz anbringbar sind.

9. Scheibenmähwerk nach einem der Ansprüche 6 bis 8, dadurch gekennzeichnet, daß die Außenkontur (25) der Förderelemente (23) im wesentlichen der benachbarten Außenkontur der Mähscheibe (5,8) entspricht und mit dieser abschließt.

10. Scheibenmähwerk nach einem der Ansprüche 6 bis 9, dadurch gekennzeichnet, daß die Förderelemente (23) einen entgegen der Drehrichtung der Mähscheibe (5,8) ansteigenden Rampenbereich (26) aufweisen und mit ihrer Vorderkante (27) einen spitzen Winkel (α) mit der Längsachse (28) der elliptischen Mähscheibenkontur einschließt.

11. Scheibenmähwerk nach Anspruch 10, dadurch gekennzeichnet, daß der äußere Endpunkt (34) der Vorderkante (27) der Förderelemente (23) in Mähscheibendrehrichtung (18;19) dem inneren Endpunkt (35) voreilt und im Bereich der arbeitenden Schneidmesser (10) angeordnet ist.

12. Scheibenmähwerk nach einem der Ansprüche 1 bis 11, dadurch gekennzeichnet, daß zwischen den äußeren Mähscheiben (4,5;8,9) mit Förderorgan (29) jeder Gruppe von Mähscheiben (4,5,6;7,8,9) jeweils ein Überleitorgan (32,33) angeordnet ist.

## Claims

1. Disc mower system with at least two driven groups of mowing discs, arranged on a mowing beam (3) next to each other, seen across the travel direction (F), turning to the right (18) or to the left (19) turning in opposite direction and conveying the forage towards each other, the mowing discs (4,5,6,7,8,9) of which being equipped with cutting blades (10) create overlapping cutting circles (21), and the mowing discs (4,5,6,7,8,9) of which having different dimensions, characterised in that all mowing discs (4,5,6,7,8,9) perform the same cutting circles (21) and having at least one mowing disc (5; 8) which, compared to a neighbouring mowing disc (4; 6), (7; 9) shows dimensions creating different working circles (15, 16).

2. Disc mower system according to claim 1, characterised in that the cutting blades (10) of the mowing disc(s) (5, 8) having a larger working circle (16) have a lower operative cutting length (20) than the cutting blades (10) on other mowing discs (4,6,7,9).

3. Disc mower system according to claim 1, characterised in that within a group of three mowing discs (4,5,6;7,8,9) rotating in the same direction, the centre mowing disc (5,8) performs a larger operating circle (16).

4. Disc mower system according to one of claims 1 to 3, characterised in that two mowing discs (6, 7) determining the swath width and belonging to a group of mowing discs (4,5,6;7,8,9) rotating in the same direction are neighboured by mowing discs (5, 8) having an enlarged operating circle (16).

5. Disc mower system according to one of claims 1 to 4, characterised in that the mowing discs (4,5,6,7,8,9) have an elliptic basic shape and that the mowing discs (5, 8) with an enlarged operating circle (16) have a larger longitudinal extension (17) than the other mowing discs (4,6,7,9).

6. Disc mower system according to one of claims 1 to 5, characterised in that the mowing discs (5, 8) with a larger operating circle (16) are equipped with conveying elements (23) in the area of their larger longitudinal extension (17) which increase the conveying action of and lift the forage.

7. Disc mower system according to claim 6, characterised in that the conveying elements (23) attached to their mowing disc (5, 8) can be detached.

8. Disc mower system according to one of claims 6 or 7, characterised in that the conveying elements (23) on the mowing discs (5, 8) can be fitted for a clockwise or anti-clockwise rotation.

9. Disc mower system according to one of claims 6 to 8, characterised in that the outer contour (25) of the conveying elements (23) mainly corresponds to the neighbouring outer contour of the mowing disc (5, 8) and is flush with same.

10. Disc mower system according to one of claims 6 to 9, characterised in that the conveying elements (23) show a ramp area (26) opposite to the rotary direction of the mowing disc (5, 8), and form an acute angle (α) with its front edge (27) and the longitudinal axis (28) of the elliptic mowing disc contour.

11. Disc mower system according to claim 10, characterised in that the outer end point (34) of front edge (27) of the conveying elements (23), seen in mowing disc rotary direction (18; 19) advances the internal end point (35) and is arranged in the area of the operating cutting blade (10).

12. Disc mower system according to one of the claims 1 to 11, characterised in that a bridging element (32, 33) each is arranged between the outer mowing discs (4,5;8,9) including conveying element (29) of each group of mowing discs (4,5,6;7,8,9).

## Revendications

1. Mécanisme à disques de fauche comportant au moins deux groupes de disques de fauche juxtaposés transversalement à la direction de déplacement (F) sur une barre de coupe (3), entraînés chaque fois en sens de rotation opposés vers la droite (18) et vers la gauche (19) et qui transfèrent les uns vers les autres le produit coupé, et dont les disques de fauche (4,5,6,7,8,9) garnis de couteaux (10) décrivent des cercles de coupe (21) se chevauchant, les disques de fauche (4,5,6,7,8,9) ayant des dimensions différentes, caractérisé en ce que tous les disques de fauche (4,5,6,7,8,9) décrivent le même cercle de coupe (21) et au moins un disque de fauche (5,8) a des dimensions générant un cercle de coupe différent (15,16) par rapport à un disque de fauche voisin (4,6), (7,9).

2. Mécanisme à disques de fauche selon la revendication 1, caractérisé en ce que les couteaux (10) des disques (5,8) ayant un grand cercle de travail (16), ont une longueur d'arête active (20) plus faible que les couteaux (10) des autres disques de fauche (4,6,7,9).

3. Mécanisme à disques de fauche selon la revendication 1, caractérisé en ce que dans une groupe de trois disques de fauche (4,5,6;7,8,9) tournant dans le même sens, le disque de fauche (5,8) médian a un cercle de travail (16) agrandi.

4. Mécanisme à disques de fauche selon l'une quelconque des revendications 1 à 3, caractérisé en ce que pour deux disques de fauche (4,5,6 ;7,8,9) appartenant à un groupe de disques tournant dans le même sens, les disques (6,7) définissant la largeur de l'andain sont juxtaposés au disque de fauche (5,8) de plus grand cercle de travail (16).

5. Mécanisme à disques de fauche selon l'une quelconque des revendications 1 à 4, caractérisé en ce que les disques de fauche (4,5,6 ;7,8,9) ont une forme de base elliptique et les disques (5,8) de grand cercle de travail (16) ont une extension longitudinale (17) plus grande que les autres disques (4,6,7,9).

6. Mécanisme à disques de fauche selon l'une quelconque des revendications 1 à 5, caractérisé en ce que les disques de fauche (5,8) de grand cercle de travail (16) portent des éléments de transfert (23) dans leur zone de plus grande extension longitudinale (17), ces éléments accentuant le transfert du produit coupé,

7. Mécanisme à disques de fauche selon la revendication 6, caractérisé en ce que les éléments de transfert (23) sont reliés de manière amovible à leur disque de fauche (5,8).

8. Mécanisme à disques de fauche selon l'une quelconque des revendications 6 ou 7, caractérisé en ce que les éléments de transfert (23) peuvent se monter sur les disques de fauche (5,8) pour tourner à droite ou à gauche.

9. Mécanisme à disques de fauche selon l'une quelconque des revendications 6 à 8, caractérisé en ce que le contour extérieur (25) des éléments de transfert (23) correspond pour l'essentiel au contour extérieur voisin des disques de fauche (5,8) et rejoint celui-ci.

10. Mécanisme à disques de fauche selon l'une quelconque des revendications 6 à 9, caractérisé en ce que les éléments de transfert (23) ont une zone en forme de rampe (26) montant contre le sens de rotation du disque (5,8) et forment avec leur arête avant (27) un angle aigu (α) avec l'axe longitudinal (28) du contour elliptique du disque de fauche.

11. Mécanisme à disques de fauche selon la revendication 10, caracterisé en ce que l'extrémité extérieure (34) de l'arête avant (27) des éléments de transfert (23) est en avance dans le sens de rotation (18,19) par rapport au point d'extrémité intérieur (35) et se trouve au niveau de l'arête de coupe active (10).

12. Mécanisme à disques de fauche selon l'une quelconque des revendications 1 à 11, caractérisé par un organe de transfert (32,33) respectif prévu entre les disques de fauche extérieurs (4,5 ;8,9) avec les organes de transfert (29) de chaque groupe de disques de fauche (4,5,6;7,8,9).
